# EUROPEAN PATENT SPECIFICATION

(11) **EP 3 897 203 B1**
(45) Date of publication and mention of the grant of the patent: **15.06.2022**
(21) Application number: 19817708.1
(22) Date of filing: 11.12.2019
(51) Int. Cl.: A23L 29/212, A23L 23/10, A23P 10/28

(54) **SAVOURY COMPOSITION**
WÜRZZUSAMMENSETZUNG
COMPOSITION SAVOUREUSE

(30) Priority: 20.12.2018 EP 18214751
(43) Date of publication of application: 27.10.2021
(73) Proprietor: Unilever IP Holdings B.V., 3013 AL Rotterdam (NL)
(72) Inventor: DE OLIVEIRA, Marcelo, Camilo, 6708 WH Wageningen (NL); SAILER, Winfried, 74074 Heilbronn (DE)
(74) Representative: van den Brom, Coenraad Richard
(86) International application number: PCT/EP2019/084626
(87) International publication number: WO 2020/126738

(56) References cited:
- WO-A1-2010/046038
- WO-A1-2012/119765
- WO-A1-2017/032685
- WO-A1-2017/171553
- WO-A1-2018/192753
- US-A- 4 060 645

## Description

The present invention relates to a shaped savoury composition comprising particles of puffed maize endosperm. The present invention also relates to a method of preparing such a composition and to the use of puffed maize endosperm in food products.

### Background

Savoury compositions are well known in the food industry and are used, for instance, to prepare a sauce, soup or bouillon. Savoury compositions typically comprise one or more of salt, taste enhancer, fat, herbs, spices, flavourants, and fillers, such as starch or flour, among others. Such compositions can be in the form of a loose powder than can be added e.g. by spooning or sprinkling into a cooking liquid, or in the form of a cube or tablet that can be added in one go or by crumbling into a cooking liquid.

In general, two types of bouillon cubes can be distinguished in the art, the pressed and the extruded (pasty or gel) type. Pressed cubes are typically pressed from powder, resulting in a relatively hard and dense cube, by a rotating press, as commercially available from e.g. Bonals (trademark).

Pressed cubes normally contain a structuring agent. The hardness and shape retaining characteristic of pressed cubes are influenced by the structuring agent used in the cubes' compositions. Hardness is an important characteristic of pressed cubes and these products are not easily crumbled by fingers as they retain its hardness throughout processing, packaging, and shelf life.

Native or modified starch is a common structuring agent in pressed cubes. However, native starch poses some processing limitations as they require extensive shear to prevent lump formation and/or need to undergo pre-gelatinization. Chemically modified starches, on the other hand, present the pitfall of being in the opposite direction of current market's trend: consumers are increasingly seeking for less artificial and chemically modified ingredients in their food products. On top of that, starch may negatively influence taste and/or appearance of the food products.

Attempts have been made to find alternative structuring agents. WO 2017/097499 describes pressed cubes comprising 1-25 wt.% cereal bran. Example 1 describes preparation of pressed of constant volume and weight wherein starch and starch in combination with maltodextrin has been replaced by cereal bran from diverse cereal source. Constant cube weight of 4 ± 0.01 g and length of edges of 13.1 mm were used. The hardness of the pressed cubes with replacers to starch has been suggested to be satisfactory.

WO 2010/046038 relates to a puffed starch containing powder having a loose bulk density of less than 120 g/L, characterized in that more than 90 weight % of the powder has a particle size smaller than 1 mm and the puffed starch containing powder is puffed popcorn starch containing powder. Also described is the use of the puffed popcorn starch containing powder as a solid carrier material for non-aqueous liquid or gaseous components and the use in food and animal feed products, pharmaceuticals, nutraceuticals, agrochemicals, and cosmetic or personal care products.

WO 2017/032685 relates to a shaped savoury concentrate article having a water content of not more than 10 wt.%, said article comprising:
- 50-95 wt.% particulate seasoning components;
- 2-30 wt.% oil, said oil having a solid fat content at 20°C (N₂₀) of less than 20%;
- 2-20 wt.% of prolamin particles having a prolamin content of at least 20 wt.% and a sphere equivalent mean diameter of less than 20 µm

WO 2018/192753 relates to a savoury concentrate comprising:
a) at least 30 wt.%, by weight of the concentrate, of an oil phase comprising liquid oil;
b) 3-30 wt.%, by weight of the concentrate, of an edible salt selected from sodium chloride, potassium chloride and combinations thereof;
c) 1-50 wt.%, by weight of the concentrate, of savoury taste giving ingredients selected from glutamate, 5'-ribonucleotides, sucrose, glucose, fructose, lactic acid, citric acid and combinations thereof;
d) up to 10 wt.%, by weight of the concentrate, of water; and
e) expanded gelatinized starch particles, said particles comprising, by weight of the particles, at least 50 wt.% of starch, and wherein at least 80 wt.% of said particles passes a sieve with a mesh size of 2000 pm;
wherein the expanded gelatinized starch particles are dispersed in the oil phase in a concentration of 0.5 to 35 wt.%, by weight of the combined weight of the liquid oil and the gelatinized starch particles.

WO 2007/085609 describes a "hard bouillon tablet" which is made by pressing and contains a mixture of oil and fat from 0.5% of the recipe to 15% of the recipe, as well as from 1 to 5% of water, and from 0.5 to 8% of cereal or vegetable fibres. The bouillon blocks are described here as hard.

Hard pressed cubes normally present low dissolution speed rate. Low dissolution requires a tedious stirring by the consumer upon preparation of e.g. a soup using the product.

There is thus a need for pressed cubes having adequate hardness for industrial processing and transport stability whilst presenting excellent dissolution time when used by a consumer to prepare savoury dish.

### Description

The inventors have unexpectedly found that the incorporation of particles of puffed maize endosperm in a shaped savoury composition article, such as a bouillon cube, effectively allows improvement in the dissolution speed of the product, without disadvantageously affecting hardness of pressed cubes

Moreover, the inventors have surprisingly found that particles of puffed maize endosperm incorporated in the pressed cubes as a replacer for, e.g., starch advantageously reduces the total weight of the shaped savoury composition without impacting the volume and hardness thereof.

Accordingly, there is provided a shaped savoury composition comprising:
a) 1-70 wt.%, by weight of the composition, of an edible salt selected from sodium chloride, potassium chloride and combinations thereof;
b) 1-30 wt.%, by weight of the composition, of savoury taste giving ingredients selected from glutamate, 5'-ribonucleotides, sucrose, glucose, fructose, lactic acid, citric acid and combinations thereof;
c) 0 to 10 wt.%, by weight of the composition, of polar liquid;
d) 1 to 20 wt.%, by weight of the composition, of fat component;
e) 0.2-10 wt.%, by weight of the composition, of particles of puffed maize endosperm, wherein at least 80 wt.% of the particles of the puffed maize endosperm have an average particle size of less than 3.0 mm,
wherein the combination of a) and b) constitutes at least 40 wt.% of the composition.

In a second aspect, the invention relates to a method of preparing a shaped savoury composition comprising the steps of:
- providing particles of puffed maize endosperm, wherein at least 80 wt.% of said particles having an average particle size of less than 3.0 mm, optionally in combination with oil;
- admixing edible ingredients,
- compressing the mixture into pressed savoury composition

In further aspects, the invention also relates to use of the shaped composition of the invention and to the use of the particles of puffed maize endosperm in food products.

### Detailed description of the invention

The word 'comprising' as used herein is intended to mean 'including' but not necessarily 'consisting of' or 'composed of'. In other words, the listed steps or options need not be exhaustive.

Unless specified otherwise, numerical ranges expressed in the format 'from x to y' or 'x-y' are understood to include x and y. When for a specific feature multiple preferred ranges are described in the format 'from x to y' or 'x-y', it is understood that all ranges combining the different endpoints are also contemplated. For the purpose of the invention ambient temperature is defined as a temperature of about 20°C.

Unless indicated otherwise, weight percentages (wt.%) are based on the total weight of the composition.

The term "particles" as used herein in relation to a material, refers to a particulate material that consists of discrete particles, preferably discrete particles having an average particle size of at least 10 µm. Particle size distributions of particulate components can suitably be determined with a set of sieves of different mesh sizes. The average particle size as referred to herein is the volume weighted average particle size that can be measured by the skilled person using conventional methods, for example by sieve analysis.

The edible salt that is used in accordance with the present invention is selected from sodium chloride, potassium chloride and combinations thereof. Preferably, sodium chloride represents at least 50 wt.%, more preferably at least 80 wt.% and most preferably at least 98 wt.% of said edible salt.

The edible salt which is employed in accordance with the invention preferably has a mass weighted average diameter in the range of 10-2000 µm, more preferably in the range of 100-1200 µm, and most preferably in the range of 200-800 µm.

Typically, at least 80 wt.% of the edible salt has a particle size in the range of 10-2000 µm. Even more preferably at least 80 wt.% of the edible salt has a particle size in the range of 50-1500 µm. Most preferably, at least 80 wt.% of the edible salt has a particle size in the range of 100-1000 µm.

The savoury composition preferably contains 32-70 wt.%, more preferably at least 34-60 wt.% and most preferably 35-50 wt.% of edible salt selected from sodium chloride, potassium chloride and combinations thereof. Most preferably, the edible salt is sodium chloride.

The combination of edible salt and the one or more particulate ingredients preferably constitutes at least 50 wt.%, preferably at least 60 wt.% of the composition. Most preferably the combination of edible salt and the one or more particulate ingredients constitutes 50-90 wt.% of the savoury composition.

Besides edible salt, the one or more particulate ingredients and the optional edible components, the savoury composition may suitably contain a variety of other edible ingredients. Examples of such ingredients include extracts of herbs or spices, meat extracts, flavours and colouring.

Preferably, the savoury composition comprises not more than 10 wt.% of other edible ingredients selected from extracts of herbs or spices, meat extracts, flavours and colouring. More preferably, the savoury composition comprises not more than 5 wt.%, most preferably not more than 2.5 wt.% of said other edible ingredients.

Preferably, the savoury composition comprises less than 2.5 wt.% of maltodextrin. More preferably the savoury composition comprises less than 1 wt.% of maltodextrin. Most preferably, the savoury composition comprises no maltodextrin.

### Savoury taste giving ingredients

The composition preferably comprises, by weight of the composition, 3-25 wt.%, preferably 5-20 wt.%, of the savoury taste giving ingredients, selected from glutamate, 5'-ribonucleotides, sucrose, glucose, fructose, lactic acid, citric acid and combinations thereof.

The one or more savoury taste giving ingredients employed in the present process typically have a mass weighted average diameter of at least 10 µm, more preferably of 15-3000 µm and more preferably of 20-2000 µm, even more preferably 30-1000 µm and most preferably 40-500 µm.

Sucrose, glucose and fructose are preferably present in the savoury composition in a total amount of 0 to 10 wt.%, more preferably 1 to 4 wt.%, even more preferably 1.5 to 2.5 wt.%, based on the weight of the savoury composition.

Glutamate, for example monosodium glutamate, is preferably present in the savoury composition in an amount of 0 to 25 wt.%, more preferably 5 to 20 wt.%, even more preferably 10 to 20 wt.%, based on the weight of the savoury composition.

Preferably, edible acids selected from the group of lactic acid, citric acid and combinations thereof, are present in the composition in an amount of 0 to 10 wt.%, more preferably 1 to 4 wt.%, even more preferably 1.5 to 2.5 wt.%, based on the weight of the savoury composition.

The savoury taste ingredients may be added as such or as part of a complex ingredient mixture. In a preferred embodiment, one or more of the savoury taste giving ingredients are provided by ingredients selected from the group consisting of yeast extract, hydrolysed vegetable protein, dry meat extract, dry spices, herbs and mixtures thereof.

The savoury composition according to the invention preferably comprises 0 to 5 wt.%, more preferably 0.1 to 1 wt.%, or even 0.5 to 2 wt.%, dry meat extract, based on the weight of the savoury composition.

Preferably, the savoury composition comprises yeast extracts and/or hydrolysed vegetable protein. Preferably, the savoury composition comprises 0 to 5 wt.% more preferably 0.1 to 3 wt.%, most preferably 0.5 to 2 wt.% yeast extracts and/or hydrolysed vegetable protein, by weight of the savoury composition.

The total amount of edible salt and savoury taste giving ingredients in the savoury composition is preferably 20 to 90 wt.%, preferably 30 to 80 wt.%, even more preferably 40 to 70 wt.%, based on the weight of the savoury composition. It is especially preferred that the total amount edible salt and savoury taste giving ingredients in the savoury composition is higher than that of the other non-fat ingredients, like fillers, flavour ingredients and water.

### Fat component

The savoury composition has a total fat content of 1-20 wt.%. Preferably, the total fat content is 2-15 wt.%, more preferably 4-10 wt.%, even more preferably 5-8 wt.%.

The fat that is employed is preferably a fat having a solid fat content at 20°C (N20) of less than 60%, more preferably of less than 35% and most preferably of less than 20%. Typically the solid fat has a solid fat content at 35°C (N35) of less than 30%, more preferably of less than 15% and most preferably of 0%.

The SAFA content of the fat that is employed to prepare the fat containing powder mixture preferably does not exceed 60% by weight of the total amount of fatty acids. More preferably, said SAFA content does not exceed 40 wt.%, most preferably it does not exceed 20 wt.%.

According to a particularly preferred embodiment, the fat component contains at least 50 wt.% vegetable oil, more preferably at least 80 wt.% of vegetable oil. Examples of vegetable oils that may be employed include sunflower oil, soybean oil, rapeseed oil, cottonseed oil, maize oil, olive oil, palm oil, palm kernel oil, coconut oil, fractions of these oils and combinations thereof.

Fat in the present invention include oils and fats that are solid or liquid between 20 and 70 °C. The proportion of solid fat present is given by the N-value. The N-value Nt equals the solid fat content of a fat at a temperature of 10°C as measured by means of ISO 8292 2008- Animal and vegetable fats and oils - Determination of solid fat content - Pulsed nuclear magnetic resonance method.

The total fat, preferably present in an amount as indicated in the paragraph here above, preferably has a solid fat content at 20 °C (N20) of 5 to 80 wt.%, preferably 10 to 45 wt.%, more preferably 20 to 40 wt.%, based on the weight of the fat. The total fat preferably has a solid fat content at 30 °C (N30) of 1 to 60 wt.%, more 3 to 55 wt.%, even more preferably 10 to 50 wt.%, based on the weight of the fat.

The composition of the invention comprises preferably 2 to 40 wt.%, more preferably 5 to 30 wt.%, even more preferably 7 to 20 wt.% and most preferably 10 to 15 wt.% of solid fat at 20 °C (N20), based on the weight of the savoury composition.

The melting point of the fat is preferably in the range of 20 to 70°C, more preferably in the range of 25 to 65°C, even more preferably in the range of 30 to 60 °C, most preferably in the range of 35 to 50°C. The melting point is considered the lowest temperature at which the solids level according to ISO 8292 1D 2008 is below 0.5%.

The composition preferably comprises 20 to 50 wt.%, preferably 25 to 45 wt.%, even more preferably 30 to 40 wt.%, most preferably 35 to 38 wt.% of palm oil component, having N20 of at least 60% and N30 of at least 40%.

Shaped composition according to any of the preceding claims, wherein the fat component has a solid fat content at 20°C (N20) of at least 5%, at least 10%, more preferably of 25-95% and most preferably of 50-90%.

### Polar liquid and polar fluid

The polar liquid employed in the present composition can be pure liquid or a mixture of liquids. The polar liquid may further contain one or more dissolved or dispersed components.

In accordance with one embodiment, the polar liquid contains 50-100 wt.%, more preferably 70-100 wt.% and most preferably 80-100 wt.% of fluid selected from water, liquid polyols, alcohols, sugar syrups and combinations thereof. Examples of liquid polyols that may be employed include glycerol and propylene glycol. Preferably, the polar liquid contains 50-100 wt.% water. More preferably the polar liquid contains 70-100 water, most preferably 90-100 wt.% water.

According to another preferred embodiment, the polar liquid contains 15-90 wt.% water and 10-85 wt.% of solute. The solute preferably contains at least 80 wt.% of sugars, salts, polysaccharides and combinations thereof. More preferably, the solute contains at least 80 wt.% of sugars. Preferably, these sugars are selected from the group of monosaccharides, disaccharides and trisaccharides.

The savoury composition preferably contains 0.2-8 wt.% of the polar fluid. More preferably, the composition contains 0.4-6 wt.%, most preferably 0.5-4 wt.% of the polar fluid.

The water content of the savoury composition preferably lies in the range of 0.1-6 wt.%, more preferably of 0.2-4 wt.% and most preferably of 0.3-3 wt.%.

### Puffed maize endosperm particles

Maize is cultivated around the world. One of the most common ways of consuming maize is puffing its endosperm. Puffed maize endosperm, also popularly known as popcorn, is consumed as a food per se. The fruits or maize cobs contain the seeds of the maize, known as maize kernels. Maize kernels have a typical shape and structure, which typically includes a germ, endosperm and pericarp. The endosperm tissue of maize is particularly rich in starches, typically amylase and amylopectin. In addition, it has a relatively high fibre content. The pericarp (hull) of maize kernels is relatively strong and water-impermeable

The particles of puffed maize endosperm can be suitably obtained by puffing of maize endosperm (e.g. when maize kernel is subjected to a heat and/or pressure treatment resulting in the kernel structure having bubble-shaped pores), followed by milling or other methods of size reduction. Puffed maize endosperm is also known as "popcorn". If for example popped popcorn is comminuted, the resulting mixture of particles may include germ, endosperm and pericarp, but most of the volume and weight will usually be constituted by the expanded endosperm.

Depending on the comminution method, it may be desirable to fractionate the ground material, in order to obtain a particulate material with a suitable size distribution. Such fractionation is conveniently carried out by sieving, which is a well-known technique.

The particle size distribution of the particles of puffed endosperm material used in the present invention can also conveniently be analysed by sieving. It is preferred that such analysis is carried out following the sieving method described in the Examples section below.

Puffing of maize endosperm requires a high starch content. Preferably, the maize endosperm has a starch content of at least 50 wt.%, more preferably of at least 60. wt.% and most preferably of at least 70 wt.%, by weight of dry matter.

A process of puffing can for example be done, by pre-cooking and drying the maize kernels, followed by a heating step (e.g. frying in oil). Alternatively, the maize kernels can for example be puffed by explosion/gun puffing, where the raw or pre-cooked maize kernels are placed in a sealed drum that is rotated and heated from the outside until a certain pressure is obtained, the lid is released and all maize kernels puff at the same time, and escape the drum via the lid, and are collected in a bag where water vapour can escape.

Maize kernels comprise a water impermeable hull, which keeps the water inside the seed during heating, are suitable for popping. Popping is an (almost) explosive form of puffing, in which heating of the maize kernels causes starch gelatinization and pressure build-up due to steam formation until the hull bursts and the maize kernels explosively expands to form a foamy structure.

The particles of puffed maize endosperm are preferably obtained from puffed popcorn, more preferably from popped popcorn, i.e. from puffed maize endosperm. Certain maize cultivars have been specifically bred for their suitability to be popped, including for instance Zea mays var. everta. Therefore, the particles of puffed maize endosperm are most preferably sourced from Zea mays var. everta.

According to a preferred embodiment, at least 80 wt.%, more preferably at least 90 wt.% of the starch within the puffed maize endosperm is gelatinized.

The puffed maize endosperm particles preferably have a bulk density that falls within the range of 5-220 g/l. More preferably, the puffed maize endosperm particles have a bulk density that falls within the range of 15-190 g/l, most preferably a bulk density that falls within the range of 30-170 g/l. Preferably, the puffed maize endosperm has a bulk density in the range of 25 to 100 g/L, more preferably between 35 to 80 g/L, even more preferably between 45 to 60 g/L.

The term 'bulk density' as used herein, unless indicated otherwise, refers to freely settled bulk density. Bulk density can be measured using the method of DIN:ISO 697:1981-03.

Preferably, at least 80 wt.% of the particles of the puffed maize endosperm have an average particle size of less than 2.0 mm, preferably wherein the at least 80 wt.% of the particles of the puffed maize endosperm have an average particle size of less than 1.5 mm, more preferably wherein the at least 80 wt.% of the particles of the puffed maize endosperm have an average particle size of less than 1.0 mm, even more preferably wherein the at least 80 wt.% of the particles of the puffed maize endosperm have an average particle size of less than 0.5 mm. Expressed differently, the particles of the puffed maize endosperm have an average particle size of at least 10 µm, preferably wherein at least 80 wt.% of the particles pass a sieve with apertures of 2.0 mm, more preferably 1.5 mm, more preferably 1.0 mm, even more preferably 0.5 mm.

In a preferred embodiment, the composition has a density of 0.8 to 1.6 kg/I, at 20°C. In a preferred embodiment, the density is 1.1 to 1.5 kg/I, at 20°C, more preferably 1.2 to 1.4 kg/I, at 20°C.

Preferably, the combination of edible salt and the one or more particulate ingredients constitutes at least 60 wt.% of the savoury composition, preferably wherein the combination of a) -e) constitutes at least 75 % of the savoury composition.

### Savoury composition

The shaped savoury composition of the present invention is solid or semisolid, preferably solid at 20°C. Upon dilution with water, typically hot water, the savoury composition preferably forms a bouillon, broth, gravy or sauce. According to a particularly preferred embodiment, the savoury composition is a bouillon cube, most preferably a pressed bouillon cube. Besides a strict cube shape, "cube " comprises shapes like a tablet, pillow, cylinder, ball, pyramid, as long as the shape can be used as a unit dosing format. Preferably, the shaped composition is provided in the form of a cuboid, more preferably in the form of a rectangular cuboid and most preferably in the form of a cube.

The savoury composition typically has a unit weight between 1 and 50 g, preferably between 2 and 25 g, more preferably between 3 and 22 g, and even preferably between 4 and 20 g, most preferably between 5 and 15 g.

The hardness of the composition may be suitably measured with an equipment such as a MultiTest 50 Tablet Hardness Tester Pharmatron Dr. Schleuniger, manufactured by SOTAX AG. Parameters used to measure the hardness of the cubes of the invention in such equipment are described in detail in the Examples. The measurement parameters of hardness mode were set as it follows:
- Mode:
   i. Hardness Force: 50N/s
   ii. Hardness method: linear force
- Machine Set:
   i. Mode: manual
   ii. Test order: any
   iii. Backoff: 3.00 mm
- Units:
   i. Hardness: N
   ii. Length: mm
   iii. Weight: g

Bouillon tablets are placed in the test area of the equipment and 10 replicates were carried out following the sequence: Menu, Test, Single, Hardness and Go.

Preferably, the shaped composition has a water activity of less than 0.8, preferably less than 0.65, more preferably less than 0.5, even more preferably less than 0.4, more preferably less than 0.3 and preferably more than 0.15.

Typically, the shaped composition has a hardness in the range of 50 to 1000 N, preferably 60 to 800 N, more preferably 80 to 750 N, even more preferably 100 to 500 N. The advantage of a composition having this specified hardness is that it is very convenient and easy to be handled and used by a consumer. The tablet can easily be removed from the packaging material, it can easily be handled without falling apart prematurely, and then the tablet has a hardness with makes it easy and convenient to be crumbled between the fingers of the consumer upon application of the tablet to a dish or into a pan.

Preferably, the starch is any commercially available starch as commonly used in shaped food compositions. Typical examples of starches commonly used in savoury compositions include native potato starch, corn starch, tapioca starch, rice starch.

In a preferred embodiment, the composition comprises less than 10 wt.%, by weight of the savoury composition, starch, preferably less than 5 wt.%, more preferably less than 1 wt.% starch. In a particularly preferred embodiment, the composition is substantially free of starch. Preferably, the composition comprises 0-5 wt.%, by weight of the composition, of a starch component selected from native starch, pregelatinised starch, maltodextrin, modified starch and combinations thereof.

The filler is typically present in the savoury composition in a concentration of 0 to 20 wt.%, more preferably 1 to 15 wt.%, even more preferably 2 to 12 wt.%, most preferably 5 to 10 wt.%, by weight of the savoury composition.

The total amount of amorphous powdery ingredients in the savoury composition is preferably lower than 30 wt.%, more preferably lower than 25 wt.%, most preferably lower than 20 wt.%, by weight of the savoury composition.

In a preferred embodiment of the present invention, the combination of components a), b) and c) constitutes at least 80 wt.% of the savoury composition. Preferably, the combination of components a), b) and c) constitutes at least 85 wt.%, more preferably at least 90 wt.%, and even more preferably at least 95 wt.% of the savoury composition.

In a second aspect, the present invention relates to a method of preparing a shaped savoury composition comprising the steps of:
- providing particles of puffed maize endosperm, wherein at least 80 wt.% of said particles having an average particle size of less than 3.0 mm, optionally in combination with oil;
- admixing edible ingredients,
- compressing the mixture into pressed savoury composition

Amounts, preferred amounts, ingredients as specified for the product apply also for this method, mutatis mutandis, unless specified otherwise.

The savoury composition is prepared by mixing together fat component with particles of puffed maize endosperm, edible salt and savoury taste giving ingredients. The mixing may be carried out in any mixer known in the art. In case the savoury base comprises solid fat, the solid fat is preferably molten before mixing. Preferably the polar liquid is added to the savoury base after addition of the dry ingredients such as salt and taste imparting ingredients.

Preferably, the method according to the present invention does not comprise addition of a starch component selected from native starch, pregelatinised starch, maltodextrin, modified starch and combinations thereof, or wherein the starch component is added in an amount of not more than 2% by weight of the shaped savoury composition, preferably not more than 1% by weight of the shaped savoury composition, more preferably not more than 0.5% by weight of the shaped savoury composition, most preferably 0% by weight; and not more than 50% by weight of the particles of puffed maize endosperm, preferably not more than 30% by weight, more preferably not more than 20% by weight, most preferably not more than 10% by weight of the particles of puffed maize endosperm.

In a particularly preferred embodiment, the shaped articles have a weight of 1 to 50 grams, preferably 1 to 10 grams, with a volume of 7 cm³, preferably 5 cm³ , more preferably 3 cm^{3.} Preferably, the shaped savoury composition is packaged into unit doses.

The polar liquid preferably contains 20-100 wt.% of fluid selected from water, liquid polyols, ethanol and combinations thereof.

Compressing is preferably conducted with the help of a press, such as HK 800 Economy, 8 kN, supplier Berg and Schmid GmbH, wherein the total mixture of components is pressed for instance at a constant pressure of 1-10 kN, preferably between 2-8 kN.

In a third aspect, the present invention relates to the use of a composition according to the present invention for preparing bouillon, soups, sauces, gravies or for use as a seasoning.

The use according to the present invention preferably comprises dissolving the composition according to the invention, at least part of it, in an aqueous liquid, or mixing it into a dish. The aqueous liquid is preferably water, but can be a sauce base, a soup base etc. The dish can be a vegetable dish, meat, fowl, fish etc.

The temperature of the aqueous liquid or the dish is preferably between 60 °C and 100 °C, more preferably of between 65 °C and 90 °C, even more preferably of between 70 °C and 85 °C.

In a further aspect, the invention relates to use of particles of puffed maize endosperm as structuring agent in shaped food products. Preferably, the particles are used as a replacer of structuring agent, such as, but not limited to native starch.

The invention will now be exemplified by the following non-limiting examples:

### Examples

### Hardness of bouillon cube

The hardness of the composition was measured with MultiTest 50 Tablet Hardness Tester Pharmatron Dr. Schleuniger, manufactured by SOTAX AG. The measurement parameters of hardness mode were set as it follows:
- Mode:
   i. Hardness Force: 50N/s
   ii. Hardness method: linear force
- Machine Set:
   i. Mode: manual
   ii. Test order: any
   iii. Backoff: 3.00 mm
- Units:
   i. Hardness: N
   ii. Length: mm
   iii. Weight: g

Bouillon tablets (dimensions 14 x 14 x 14) were placed in the test area of the equipment and 10 replicates were carried out following the sequence: Menu, Test, Single, Hardness and Go. During compression, the force experienced by the probe is measured. The hardness is defined as the maximum pressure that is encountered divided by the surface of the probe in touch with the cube.

### Example 1

A control composition A has been produced in a batch of 500 g (composition of the batch and in wt.% is in Table 1 below). A composition according to the invention was prepared on basis of control composition A (same amount for 500g) but replacing starch by milled popcorn in a volume ratio of 1:1. The compositions and weight of the batches are described below. Briefly, a Keenwood mixer was used in which sugar, salt, water and caramel powder were added and mixed for 2 minutes. Vegetables were added and mixed for 2 minutes. Molten fat was added and mixed 2 minutes. Starch or Milled popcorn was added and mixed for 2 minutes.

**Table 1**

| | **Control A** | | **Composition 1** | | **Composition 2** | |
|---|---|---|---|---|---|---|
| | **(wt%)** | **(g)** | **(wt%)** | **(g)** | **(wt%)** | **(g)** |
| Oil¹ | 4.48 | 22.42 | 4.97 | 22.42 | 5.08 | 22.42 |
| Palm stearin² | 1.02 | 5.09 | 1.13 | 5.09 | 0 | 0 |
| Crystal white sugar (fine 0.1-0.75mm) | 15.00 | 75 | 16.62 | 75 | 16.99 | 75 |
| Water | 0.30 | 1.5 | 0.33 | 1.5 | 0.34 | 1.5 |
| Glutamate³ | 12.00 | 60 | 13.3 | 60 | 13.59 | 60 |
| Inosinate/guanylate⁴ | 0.25 | 1.25 | 0.28 | 1.25 | 0.28 | 1.25 |
| Caramel powder | 0.55 | 2.75 | 0.61 | 2.75 | 0.62 | 2.75 |
| Citric acid E330 | 0.15 | 0.75 | 0.17 | 0.75 | 0.17 | 0.75 |
| Salt non iodized⁵ | 52.00 | 260 | 57.62 | 260 | 58.89 | 260 |
| Vegetable powders⁶ | 3.2 | 16 | 3.54 | 16 | 3.62 | 16 |
| **Milled popcorn**⁷ | **0** | **0** | **1.44** | **6.5** | **0.41** | **1.8** |
| **Corn starch native 12%H2O** | **11.05** | **55.25** | **0** | **0** | **0** | **0** |
| Batch weight | 100 | 500 | 100 | 451.25 | 100 | 441.47 |

| | | | | | | |
|---|---|---|---|---|---|---|
| ¹: F&O Palm oil frac dfPOs IV36 SG ²: Veg hydrogenated fat ³: Glutamate E 621 (< 800 micron: 75% min, < 100 micron: 15% max.) ⁴: Disodium 5'-ribonucleotides (E635) ^{5:} <0,16 mm: 5% max, > 0,8 mm: 5% max. ^{6:} particles < 4 mm, ⁷: average particle size: 0.4, based on sieve analysis (ISO 2591-1:1988) | | | | | | |

Replacing starch by milled popcorn in a volume ratio of 1:1 results in weight reduction of the entire composition.

Such replacement allowed obtaining cubes of same volume as with control composition (2.7 ml) but weighting less (control A= 4g; composition 1 and 2 = 3.8 g). The pressed cubes according to the invention are lighter than pressed cubes of same volume of a control composition.

### Example 2

Pressed cubes (n=10) according to compositions A, 1 and 2 of Example 1 were tested for hardness using a hardness tester with parameters as described above). Hardness (N) results are given in Table 2 below.

**Table 2**

| | **Control A** | **Composition 1** | **Composition 2** |
|---|---|---|---|
| Hardness (N) | 100.6 ± 14.3 | 56.3 ± 6.8 | 111.1 ± 14.7 |

The pressed cubes of the invention have good hardness (>50 N) for pressed cubes, despite weight reduction in same cube volume.

### Example 3

Analytical and manual dissolution times of pressed cubes (n=3) obtained with compositions A (wt= 4g), 1 and 2 (wt = 3.8 g) of Example 1 were measured.

Manually, the dissolution time was measured by adding the cubes to 200 ml water at 100 oC in glass beaker (v= 600 ml, h=125mm, ext. Ø= 90 mm) without crumbling or stirring. The cube is placed on a spoon and the spoon is moved into the water, to the bottom of the beaker in one smooth movement. When the spoon touches the bottom, start timing and manual stirring. Stirring is done at 2 rounds per second (2Hz). Time is stopped after the cube is completely dissolved.

The analytical dissolution is the following: The dissolution of the cubes was measured by a dynamic conductivity measurement. A portion of 500 milliliter of demineralized water in a 600 milliliter beaker glass with a diameter of 12.7cm is brought at a temperature of 92C and one cube is dissolved under continuous stirring using a triangular stirring bar with a length of 8 cm at a constant stirring speed of 170 rpm. The conductivity of the water is monitored in time using a Mettler Toledo Seven Compact conductivity meter. The conductivity rises due to dissolution of the salts from the formulation into the water, until all salt is dissolved and a maximum is reached. The dissolution time is defined as the time at which the conductivity has reached 99% of the final plateau conductivity value. Measurements are carried out in threefold.

The results are shown in Table 3 below.

**Table 3**

| | **Manual (sec)** | **Analytical (sec)** |
|---|---|---|
| Control A | 30 ± 2.0 | 37.7 ± 8.5 |
| Composition 1 | 13.3 ± 1.5 | 17.3 ± 2.1 |
| Composition 2 | 12.3 ± 0.6 | 17.7 ± 1.2 |

The pressed cubes according to the invention dissolve faster than the pressed cubes of a control composition.

### Example 4

The volumetric replacement (1:1) of starch of control A with extruded potato starch Aeromyl (Südstärke) has been tested. A batch with identical amounts (in grams) of the components used for producing a 500g-batch according to Control A (Table 1) was produced, except for no starch was added but instead Aeromyl: Comparative B comprised 8.45g (1.9 wt%) of Aeromyl instead of starch of control A, and Comparative C comprised 13.70 g (3.0%) Aeromyl instead of starch of control A. The total weight of the batches of the compositions B and C were 453.2 g and 458.45g, respectively.

Pressed cubes were produced and tested for hardness and dissolution times as in Examples 2 and 3, respectively.

The results are in Table 4 below.

**Table 4**

| | **Comparative B** | **Comparative C** |
|---|---|---|
| Hardness (N) | 34.3 ± 10.5 | 11.3 ± 2.1 |
| Manual dissolution (sec) | 13.0 ± 1.0 | 9.3 ± 0.6 |
| Analytical dissolution (sec) | 13.7 ± 1.2 | 11.0 ± 1.7 |

## Claims

1. A shaped savoury composition comprising:
a) 1-70 wt.%, by weight of the composition, of an edible salt selected from sodium chloride, potassium chloride and combinations thereof;
b) 1-30 wt.%, by weight of the composition, of savoury taste giving ingredients selected from glutamate, 5'-ribonucleotides, sucrose, glucose, fructose, lactic acid, citric acid and combinations thereof;
c) 0 to 10 wt.%, by weight of the composition, of polar liquid;
d) 1 to 20 wt.%, by weight of the composition, of fat component;
e) 0.2-10 wt.%, by weight of the composition, of particles of puffed maize endosperm,
wherein at least 80 wt.% of the particles of the puffed maize endosperm have an average particle size of less than 3.0 mm,
wherein the combination of a) and b) constitutes at least 40 wt.% of the composition.

2. Shaped composition according to claim 1, wherein the shaped composition has a hardness of 50 to 1000 N, preferably 60 to 800 N, more preferably 80 to 750 N.

3. Shaped composition according to claim 1 or 2, wherein the shaped composition comprises at least 50 wt% by weight of the composition of an edible salt.

4. Shaped composition according to any of the preceding claims, wherein the fat component is selected from the group consisting of sunflower oil, soybean oil, rapeseed oil, cottonseed oil, maize oil, olive oil, palm oil, palm kernel oil, coconut oil, fractions of these oils and combinations thereof.

5. Shaped composition according to any of the preceding claims, wherein the fat component has a solid fat component (N20) of less than 10%, preferably less than 5%, even more preferably less than 1%.

6. Shaped composition according to any of the preceding claims, wherein the particles of puffed maize endosperm are present in an amount of 0.3-8 wt.%, by weight of the composition, preferably 0.5 to 5 wt.%.

7. Shaped composition according to any of the preceding claims, wherein at least 80 wt.% of the particles of the puffed maize endosperm have an average particle size of less than 2.0 mm, preferably wherein the at least 80 wt.% of the particles of the puffed maize endosperm have an average particle size of less than 1.5 mm.

8. Shaped composition according to any one of the preceding claims, wherein the combination of edible salt and the one or more particulate ingredients constitutes at least 60 wt.% of the savoury composition, preferably wherein the combination of a) - e) constitutes at least 75 % of the savoury composition.

9. Shaped composition according to any one of the preceding claims, wherein the shaped composition has a cubic, cuboid or cylindrical shape.

10. Shaped composition according to any one of the preceding claims, wherein the composition comprises:
a) 35-50 wt.%, by weight of the composition, of an edible salt selected from sodium chloride, potassium chloride and combinations thereof;
b) 5-20 wt.%, by weight of the composition, of savoury taste giving ingredients selected from glutamate, 5'-ribonucleotides, sucrose, glucose, fructose, lactic acid, citric acid and combinations thereof;
c) 0.3 to 3 wt.%, by weight of the composition, of water;
d) 4 to 10 wt.%, by weight of the composition, of fat component;
e) 0.2-10 wt.%, by weight of the composition, of particles of puffed maize endosperm,
wherein the combination of a) and e) constitutes at least 75 wt.% of the composition.

11. A method of preparing a shaped savoury composition according to any one of the preceding claims, said method comprising the steps of:
- providing particles of puffed maize endosperm, wherein at least 80 wt.% of said particles having an average particle size of less than 3.0 mm, optionally in combination with oil;
- admixing edible ingredients,
- compressing the mixture into pressed savoury composition.

12. A method, according to claim 11, wherein the method does not comprise addition of a starch component selected from native starch, pregelatinised starch, maltodextrin, modified starch and combinations thereof, or wherein the starch component is added in an amount of not more than 2% by weight of the final savoury composition and not more than 50% by weight of the particles of puffed maize endosperm.

13. Method according to claim 11 or 12, wherein the shaped savoury composition is packaged into a unit dose having a weight in the range of 1 to 50 grams.

14. Use of a composition according to any one of claims 1-10 for preparing bouillon, soups, sauces, gravies or for use as a seasoning.

## Patentansprüche

1. Geformte Würzzusammensetzung, umfassend:
a) 1-70 Gew.-% eines essbaren Salzes, bezogen auf das Gewicht der Zusammensetzung, ausgewählt aus Natriumchlorid, Kaliumchlorid und Kombinationen davon;
b) 1-30 Gew.-% wohlschmeckende, Geschmack gebende Inhaltsstoffe, bezogen auf das Gewicht der Zusammensetzung, ausgewählt aus Glutamat, 5'-Ribonucleotiden, Saccharose, Glucose, Fructose, Milchsäure, Zitronensäure und Kombinationen davon;
c) 0 bis 10 Gew.-% polare Flüssigkeit, bezogen auf das Gewicht der Zusammensetzung;
d) 1 bis 20 Gew.-% Fettkomponente, bezogen auf das Gewicht der Zusammensetzung;
e) 0,2-10 Gew.-% Teilchen von Puffmais-Endosperm, bezogen auf das Gewicht der Zusammensetzung;
wobei mindestens 80 Gew.-% der Teilchen des Puffmais-Endosperms eine durchschnittliche Teilchengröße von weniger als 3,0 mm aufweisen,
wobei die Kombination von a) und b) mindestens 40 Gew.-% der Zusammensetzung ausmacht.

2. Geformte Zusammensetzung nach Anspruch 1, wobei die geformte Zusammensetzung eine Härte von 50 bis 1000 N, vorzugsweise von 60 bis 800 N, bevorzugter von 80 bis 750 N, aufweist.

3. Geformte Zusammensetzung nach Anspruch 1 oder 2, wobei die geformte Zusammensetzung mindestens 50 Gew.-% eines essbaren Salzes, bezogen auf das Gewicht der Zusammensetzung, umfasst.

4. Geformte Zusammensetzung nach einem der vorhergehenden Ansprüche, wobei die Fettkomponente aus der Gruppe ausgewählt ist, bestehend aus Sonnenblumenöl, Sojabohnenöl, Rapsöl, Baumwollsamenöl, Maisöl, Olivenöl, Palmöl, Palmkernöl, Kokosnussöl, Fraktionen dieser Öle und Kombinationen davon.

5. Geformte Zusammensetzung nach einem der vorhergehenden Ansprüche, wobei die Fettkomponente eine Festfettkomponente (N20) von weniger als 10%, vorzugsweise weniger als 5%, noch bevorzugter weniger als 1%, aufweist.

6. Geformte Zusammensetzung nach einem der vorhergehenden Ansprüche, wobei die Teilchen des Puffmais-Endosperms in einer Menge von 0,3-8 Gew.-%, bezogen auf das Gewicht der Zusammensetzung, vorzugsweise von 0,5 bis 5 Gew.-%, vorliegen.

7. Geformte Zusammensetzung nach einem der vorhergehenden Ansprüche, wobei mindestens 80 Gew.-% der Teilchen des Puffmais-Endosperms eine durchschnittliche Teilchengröße von weniger als 2,0 mm, wobei vorzugsweise die mindestens 80 Gew.-% der Teilchen des Puffmais-Endosperms eine durchschnittliche Teilchengröße von weniger als 1,5 mm aufweisen.

8. Geformte Zusammensetzung nach irgendeinem der vorhergehenden Ansprüche, wobei die Kombination des essbaren Salzes und der ein oder mehreren teilchenförmigen Inhaltsstoffe mindestens 60 Gew.-% der Würzzusammensetzung ausmachen, wobei vorzugsweise die Kombination von a)-e) mindestens 75% der Würzzusammensetzung ausmacht.

9. Geformte Zusammensetzung nach irgendeinem der vorhergehenden Ansprüche, wobei die geformte Zusammensetzung eine kubische, quaderförmige oder zylindrische Form aufweist.

10. Geformte Zusammensetzung nach irgendeinem der vorhergehenden Ansprüche, wobei die Zusammensetzung umfasst:
a) 35-50 Gew.-% eines essbaren Salzes, bezogen auf das Gewicht der Zusammensetzung, ausgewählt aus Natriumchlorid, Kaliumchlorid und Kombinationen davon;
b) 5-20 Gew.-% wohlschmeckende, Geschmack gebende Inhaltsstoffe, bezogen auf das Gewicht der Zusammensetzung, ausgewählt aus Glutamat, 5'-Ribonucleotiden, Saccharose, Glucose, Fructose, Milchsäure, Zitronensäure und Kombinationen davon;
c) 0,3 bis 3 Gew.-% Wasser, bezogen auf das Gewicht der Zusammensetzung;
d) 4 bis 10 Gew.-% Fettkomponente, bezogen auf das Gewicht der Zusammensetzung;
e) 0,2-10 Gew.-% Teilchen von Puffmais-Endosperm, bezogen auf das Gewicht der Zusammensetzung,
wobei die Kombination von a) und e) mindestens 75 Gew.-% der Zusammensetzung ausmacht.

11. Verfahren zur Herstellung einer geformten Würzzusammensetzung nach irgendeinem der vorhergehenden Ansprüche, wobei das Verfahren die Schritte umfasst:
- Bereitstellen von Teilchen von Puffmais-Endosperm, wobei mindestens 80 Gew.-% der Teilchen eine durchschnittliche Teilchengröße von weniger als 3,0 mm aufweisen, gegebenenfalls in Kombination mit Öl;
- Beimischen von essbaren Inhaltsstoffen;
- Komprimieren der Mischung zu einer gepressten Würzzusammensetzung.

12. Verfahren nach Anspruch 11, wobei das Verfahren nicht umfasst die Zugabe einer Stärkekomponente, ausgewählt aus nativer Stärke, vorgelatinierter Stärke, Maltodextrin, modifizierter Stärke und Kombinationen davon, oder wobei die Stärkekomponente in einer Menge von nicht mehr als 2 Gewichts-% der fertigen Würzzusammensetzung und nicht mehr als 50 Gewichts-% der Teilchen des Puffmais-Endosperms zugegeben wird.

13. Verfahren nach Anspruch 11 oder 12, wobei die geformte Würzzusammensetzung in einer Einheitsdosis mit einem Gewicht in dem Bereich von 1 bis 50 Gramm verpackt wird.

14. Verwendung einer Zusammensetzung nach irgendeinem der Ansprüche 1 bis 10 zur Herstellung von Bouillon, Suppen, Soßen, Bratensoßen oder zur Verwendung als Gewürz.

## Revendications

1. Composition savoureuse façonnée comprenant :
a) 1-70 % en masse, en masse de la composition, d'un sel comestible choisi parmi le chlorure de sodium, chlorure de potassium et des combinaisons de ceux-ci ;
b) 1-30 % en masse, en masse de la composition, d'ingrédients fournissant un goût savoureux choisis parmi le glutamate, les 5'-ribonucléotides, le saccharose, glucose, fructose, acide lactique, acide citrique et des combinaisons de ceux-ci ;
c) 0 à 10 % en masse, en masse de la composition, de liquide polaire ;
d) 1 à 20 % en masse, en masse de la composition, de constituant de graisse ;
e) 0,2-10 % en masse, en masse de la composition, de particules d'endosperme de maïs éclaté,
dans laquelle au moins 80 % en masse des particules de l'endosperme de maïs éclaté présentent une taille moyenne de particule inférieure à 3,0 mm,
dans laquelle la combinaison de a) et b) constitue au moins 40 % en masse de la composition.

2. Composition façonnée selon la revendication 1, dans laquelle la composition façonnée présente une dureté de 50 à 1 000 N, de préférence 60 à 800 N, encore mieux 80 à 750 N.

3. Composition façonnée selon la revendication 1 ou 2, dans laquelle la composition façonnée comprend au moins 50 % en masse de la composition d'un sel comestible.

4. Composition façonnée selon l'une quelconque des revendications précédentes, dans laquelle le constituant de graisse est choisi dans le groupe consistant en huile de tournesol, huile de soja, huile de colza, huile de coton, huile de maïs, huile d'olive, huile de palme, huile de palmiste, huile de noix de coco, fractions de ces huiles et combinaisons de celles-ci.

5. Composition façonnée selon l'une quelconque des revendications précédentes, dans laquelle le constituant de graisse présente un constituant de graisse solide (N20) inférieur à 10 %, de préférence inférieur à 5 %, encore mieux inférieur à 1 %.

6. Composition façonnée selon l'une quelconque des revendications précédentes, dans laquelle les particules d'endosperme de maïs éclaté sont présentes dans une quantité de 0,3-8 % en masse, en masse de la composition, de préférence 0,5 à 5 % en masse.

7. Composition façonnée selon l'une quelconque des revendications précédentes, dans laquelle au moins 80 % en masse des particules de l'endosperme de maïs éclaté présentent une taille moyenne de particule inférieure à 2,0 mm, de préférence dans laquelle les au moins 80 % en masse des particules de l'endosperme de maïs éclaté présentent une taille de particule inférieure à 1,5 mm.

8. Composition façonnée selon l'une quelconque des revendications précédentes, dans laquelle la combinaison de sel comestible et les un ou plusieurs ingrédients particulaires constituent au moins 60 % en masse de la composition savoureuse, de préférence dans laquelle la combinaison de a) - e) constitue au moins 75 % de la composition savoureuse.

9. Composition façonnée selon l'une quelconque des revendications précédentes, dans laquelle la composition façonnée présente une forme cubique, cuboïde ou cylindrique.

10. Composition façonnée selon l'une quelconque des revendications précédentes, dans laquelle la composition comprend :
a) 35-50 % en masse, en masse de la composition, d'un sel comestible choisi parmi le chlorure de sodium, chlorure de potassium et des combinaisons de ceux-ci ;
b) 5-20 % en masse, en masse de la composition, d'ingrédients fournissant un goût savoureux choisis parmi le glutamate, les 5'-ribonucléotides, le saccharose, glucose, fructose, acide lactique, acide citrique et des combinaisons de ceux-ci ;
c) 0,3 à 3 % en masse, en masse de la composition, d'eau ;
d) 4 à 10 % en masse, en masse de la composition, de constituant de graisse ;
e) 0,2-10 % en masse, en masse de la composition, de particules d'endosperme de maïs éclaté,
dans laquelle la combinaison de a) et e) constitue au moins 75 % en masse de la composition.

11. Procédé de préparation d'une composition savoureuse façonnée selon l'une quelconque des revendications précédentes, le procédé comprenant les étapes de :
- fourniture de particules d'endosperme de maïs éclaté, dans lequel au moins 80 % en masse desdites particules ayant une taille moyenne de particule inférieure à 3,0 mm, éventuellement en combinaison avec de l'huile ;
- mélange d'ingrédients comestibles,
- compression du mélange en une composition savoureuse comprimée.

12. Procédé selon la revendication 11, dans lequel le procédé ne comprend pas l'addition d'un constituant d'amidon choisi parmi l'amidon natif, l'amidon prégélatinisé, la maltodextrine, l'amidon modifié et des combinaisons de ceux-ci, ou dans lequel le constituant d'amidon est ajouté dans une quantité d'au plus 2 % en masse de la composition savoureuse finale et d'au plus 50 % en masse des particules d'endosperme de maïs éclaté.

13. Procédé selon la revendication 11 ou 12, dans lequel la composition savoureuse façonnée est emballée dans une dose unitaire ayant une masse dans l'intervalle de 1 à 50 grammes.

14. Utilisation d'une composition selon l'une quelconque des revendications 1-10 pour la préparation d'un bouillon, de soupes, de sauces, de jus de viande ou pour une utilisation comme un assaisonnement.
